(19) Europäisches Patentamt
European Patent Office
Office européen des brevets

(11) **EP 2 364 891 B1**

(12) **EUROPEAN PATENT SPECIFICATION**

(45) Date of publication and mention
of the grant of the patent:
**19.06.2013 Bulletin 2013/25**

(51) Int Cl.:
*B60W 30/08* (2012.01)    *B60W 40/06* (2012.01)

(21) Application number: **10156390.6**

(22) Date of filing: **12.03.2010**

(54) **Method for threat assessment in a vehicle**

Verfahren zum Einschalten einer elektronischen Fahrerunterstützungsfunktion

Methode pour permettre l'intervention d'un system automatique de support au conducteur

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**14.09.2011 Bulletin 2011/37**

(73) Proprietor: **Volvo Car Corporation**
**405 31 Göteborg (SE)**

(72) Inventors:
• **Ali, Mohammad**
**424 44, Angered (SE)**
• **Falcone, Paolo**
**41130, Göteborg (SE)**

(74) Representative: **Widahl, Jenny Marie**
**Volvo Car Corporation**
**50094 Intellectual Property**
**Dept 50094 - HBBVN-VAK**
**40531 Göteborg (SE)**

(56) References cited:
EP-A1- 2 045 161       EP-A2- 0 483 905
EP-A2- 2 006 181       DE-A1-102007 019 698
US-A1- 2004 186 647    US-A1- 2009 174 536

**Description**

TECHNICAL FIELD

The present invention concerns a method for threat assessment in a vehicle, a computer program product, an ECU and a vehicle.

BACKGROUND OF THE INVENTION

Today many vehicles are equipped with active safety systems that can be activated in response to a safety problem or abnormal event either by a human operator, automatically by a computer controlled system, or even mechanically. Well known and widely used active safety systems include anti-lock braking systems, electronic stability control, brake assist systems and traction control and mainly affect the dynamical behavior of the vehicle.

Advanced Driver Assistance Systems (ADAS) influence both the dynamical behavior of the vehicle and its motion within the surrounding environment and can efficiently implement accident prevention functions. Such ADAS systems include adaptive cruise control, lane guidance systems assisting a driver in maintaining a vehicle within the lane boundaries, lane change assistance and collision avoidance systems. Such advanced active safety functions have been enabled by advances in sensing technologies, which have led to affordable onboard sensors providing the vehicle position and velocity in a global frame as well as information about the surrounding environment, such as road geometry and the relative position and velocity of moving objects.

Future ADAS are envisioned to implement autonomous driving capabilities in order to perform complex evasive maneuvers, without requiring the driver. Clearly, an active safety intervention may be activated when a driver does not need assistance and may therefore be perceived as intrusive and distracting by drivers. For this reason, both existing and future ADAS have to rely on a threat assessment layer determining if/when an intervention should take place.

EP 2 045 161 concerns a mapping module that is arranged to identify admissible curved paths for which the vehicle is able to stop prior to reaching a detected obstacle in accordance with an observed translational velocity and an observed rotational velocity. A data processor determines a respective objective function for the candidate translational velocities and candidate rotational velocities associated with the admissible curved paths, where the objective function includes a curvature comparison term associated with the last curved path of the vehicle. A search engine selects preferential velocities, among the candidate translational velocities and candidate rotational velocities, with a superior value for its corresponding objective function. A path planning module determines the vehicular speed and trajectory for a path plan that avoids the obstacle consistent with the selected preferential velocities.

EP 2 006 181 discloses an avoidance maneuver calculation device that calculates a driving maneuver amount that enables an automotive vehicle to avoid an obstacle within a travelable range of a road. The device includes: a road boundary detector for detecting a road where a vehicle is traveling and a boundary section thereof; an obstacle detector for detecting an obstacle existing on the road; an automotive vehicle information detector for detecting information on the vehicle; and an avoidance maneuver calculator for calculating a maneuver amount for avoiding the obstacle on the road.

US 2009/174536 is directed to a method to operate a host vehicle having a rearview camera vision sensor, and an electronic controller with memory. The method comprises the steps of determining whether the host vehicle is in reverse gear, activating a rearview camera vision sensor on said host vehicle to detect objects, determining host vehicle motion and path of travel, simultaneously determining an inter-frame difference metric and a histogram difference metric of the field of view of said rearview camera, determining a dynamic scene change, determining a collision threat assessment based upon said dynamic scene change, and activating warnings and collision avoidance moves.

DE 10 2007 019698 concerns a method that involves feeding detected information about vehicle states to a mathematical vehicle model implemented in the vehicle and deriving control parameters for supporting the driving movement, whereby the model contains a stationary sub-model and a dynamic sub-model.

EP 0 483 905 describes that maneuvers of a controlled vehicle, such as a car, travelling at moderate to high speeds are planned by propagating cost waves in a configuration space using two search strategies referred to as budding and differential budding. Control is achieved by monitoring properties of the controlled vehicle and adjusting control parameters to achieve motion relative to a frame of reference. The frame of reference may change before the transformation to configuration space occurs. The method transforms goals, obstacles, and the position of the controlled vehicle in task space to a configuration space based on the position of these objects relative to a moving frame of reference. The method also determines a local neighbourhood of possible motions based on the control capabilities of the vehicle. In one embodiment, the controlled parameters are time derivatives of the monitored properties. A variation of the method provides for the parallel computation of the configuration space. In one embodiment of the parallel computation, the case where two processes are used, a first process and configuration space would be used to plan. A second process and configuration space would be used to read the setpoints which are sent as control directives to the vehicle.

US 2004/186647 discloses that a target resultant force to be applied to a vehicle body is calculated, the magnitude of a critical friction circle of each wheel is estimated, and a critical resultant force is estimated from the estimated magnitude of the critical friction circle. Subsequently, a ratio of the target resultant force to a critical resultant force is set as an effective road friction, and the magnitude of a tire force is set by using the magnitude of the critical friction circle and the effective road friction. The direction of the tire force of each wheel to be controlled is set based on the sum of products, which are calculated for all other wheels, of a distance from the position of the wheel to be controlled to the position of the other wheel in a direction of the resultant force, and the magnitude of the tire force of the other wheel.; Cooperative control of steering and braking or steering and driving of each wheel to be controlled is performed based on the magnitude and direction of the tire force which have been set.

SUMMARY OF THE INVENTION

An objective of the invention is to provide a novel method for threat assessment in ADAS.

Most conventional threat assessment methods are tailored to a specific active safety function. On the contrary, the method proposed in the present invention is model based and can be used in a number of different active safety functions, such as forward collision avoidance, maintaining a vehicle within lane boundaries while preserving vehicle stability. This allows cost savings and easily implementation of the method in different vehicles.

At least one of these objectives is achieved by the subject matter of claim 1.

As a result, as long as the vehicle current state belongs to the computed safe sets, no autonomous intervention is issued.

Since the proposed method takes into account the driver's ability to perform a desired/required maneuver in enabling a (possibly autonomous) safety intervention, it excludes the driver only when it is necessary, thereby providing a less intrusive overall driver assistance system while still preserving vehicle safety.

In an embodiment of the present invention the following definitions from set invariance theory and reachability analysis are used.

The set of all real numbers and positive integers is denoted by R and N$^+$ respectively.

The state update function, $f_a$ of an autonomous system is defined by;

$$x(t + 1) = f_a\left(x(t), \omega(t)\right), \qquad (1)$$

where x(t) and w(t) denote the state and disturbance vectors respectively and whereby the autonomous system is subject to the constraints;

$$x(t) \in \chi \subseteq R^n, \omega(t) \in \mathcal{W} \subseteq R^d, \qquad (2)$$

where $X$ and $W$ are polyedra containing the origin in their interior, and for the autonomous system (1)-(2), the set of states that evolves to S in one step is defined by;

$$Pre_{f_a}(S, \mathcal{W}) \triangleq \{ x \in \mathcal{X} \mid f_a(x, \omega) \in S, \forall \omega \in \mathcal{W} \}. \qquad (3)$$

Similarly, for the nominal system, i.e. *w*=0 it is defined by;

$$Pre_{f_a}(S) \triangleq \{ x \in \mathcal{X} \mid f_a(x, 0) \in S \} \qquad (4)$$

Further definitions are:

- A polyhedron is a set that equals the intersection of a finite number of closed half spaces.
- A set *O* is said to be a robust positive invariant set for the autonomous system (1) subject to the constraints in equation (2), if;

$$x(0) \in \mathcal{O} \implies x(t) \in \mathcal{O}, \forall t \in N^{+}.$$

- The set $O_{\infty}$ is the maximal robust invariant set of the autonomous system (1) subject to the constraints in (2) if $0 \in O_{\infty}$ where $O_{\infty}$ is a robust positive invariant set and $O_{\infty}$ contains all the robust positive invariant sets contained in $\chi$ that contain the origin.

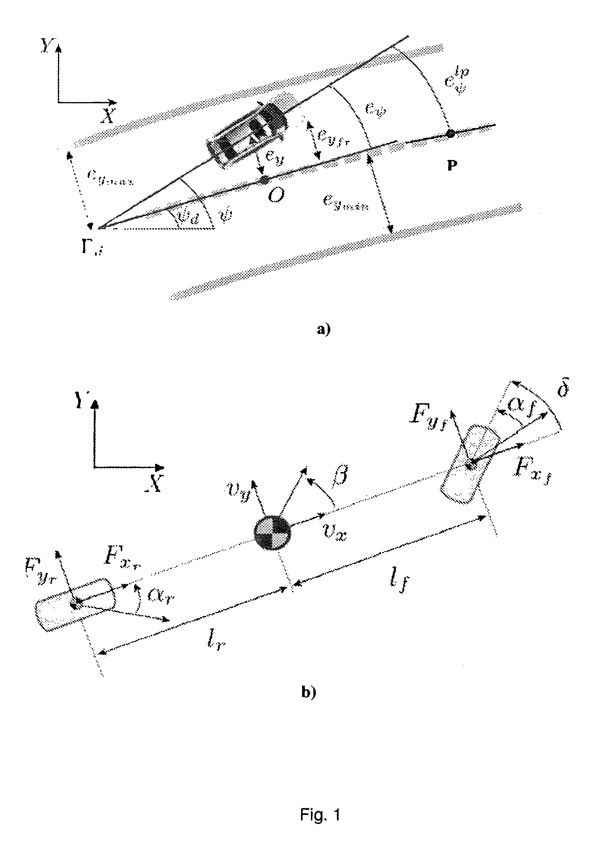

According to another embodiment of the invention, in the vehicle modelling the vehicle motion within a lane, subject to lateral and yaw dynamics, is described by the following set of differential equations with reference to the vehicle model illustrated in figure 1;

$$m\dot{v}_y = -mv_x\,\dot{\psi} + 2\left[F_{y_f} + F_{y_r}\right], \qquad (5a)$$

$$J_z\ddot{\psi} = 2\left[l_f\,F_{y_f} - l_r\,F_{y_r}\right], \qquad (5b)$$

$$\dot{e_\psi} = \dot{\psi} - \dot{\psi_d}\,, \qquad (5c)$$

$$\dot{e_y} = v_y + v_x\,e_\psi\,, \qquad (5d)$$

where $m$ and $J_z$ denote the vehicle mass and yaw inertia, respectively, $l_f$ and $l_r$ are the distances of the vehicle center of gravity from the front and rear axles, respectively. $v_x$ and $v_y$ are the longitudinal and lateral velocities, respectively, $\psi$ is the turning rate in the vehicle body frame, where $\psi$ denotes the vehicle orientation with respect to the fixed global frame (X, Y) in figure 1a). $F_{yf}$, $F_{yr}$ are the lateral tyre forces at the front and rear axles, respectively and in equations (5c) and (5d), $e_\psi$ and $e_y$ denote the vehicle orientation and position errors, respectively, with respect to the road centerline and $\psi_d$ is the desired vehicle orientation, i.e. the slope of the tangent to the curve $\Gamma_d$ at the point O.

Lateral tyre forces in equations (5a) and (5b) are generated at the tyre contact patch and are, in general nonlinear functions of the vehicle states. Accurate physical modeling of tyre forces is quite involved and several models have been proposed in the literature over the past two decades. In an embodiment of the present invention lateral tyre forces are computed using the equation;

$$F_{y,i} = -C_i\alpha_i\,, \quad i \in \{f, r\}, \qquad (6)$$

where $C_i$ are the tyre cornering stiffness coefficients at the two axles and $\alpha_i$ are the tyre slip angles which, for small values, can be approximated as;

$$\alpha_f = \frac{v_y + l_f\,\dot{\psi}}{v_x} - \delta\,, \qquad (7a)$$

$$\alpha_r = \frac{v_y - l_r\,\dot{\psi}}{v_x}\,, \qquad (7b)$$

with $\delta$ denoting the front steering angle.

In order to avoid possible vehicle instability due to the effects of the tyre nonlinearities, the vehicle is forced to operate in a region of the state space corresponding to limited values of the vehicle body side slip angle $\beta$, where $\beta$, is approximated as $\beta = \dfrac{v_y}{v_x}$ .

Constraints on the vehicle position are set by the limited lane width. In order to formulate constraints on the vehicle position within a lane, $e_{y_{ij}}, i \in \{f,r\}, j \in \{l,r\}$ denotes the distances of the four vehicle corners from the lane centreline. By assuming small orientation errors,

$$e_{y_{fl}} = e_y + \frac{c}{2} + a e_\psi , \quad e_{y_{fr}} = e_y - \frac{c}{2} + a e_\psi ,$$

$$e_{y_{rl}} = e_y + \frac{c}{2} - b e_\psi , \quad e_{y_{rr}} = e_y - \frac{c}{2} - b e_\psi ,$$

where c is the vehicle width and a and b are the distances of the center of gravity from the front and rear vehicle bumpers, respectively. The constraints on the vehicle position are given by:

$$e_{y_{min}} \leq e_{y_{ij}} \leq e_{y_{max}} , \quad i \in \{f,r\}, \ j \in \{l,r\}, \tag{10}$$

where $e_{y_{min}}$ and $e_{y_{max}}$ set the maximum allowed deviation from the lane centerline. It should be noted that constraints on the tyre slip angles may also be imposed.

The model equations (5)-(9), along with the constraints given in equations (8) and (10) can be compactly written as:

$$\dot{x}(t) = Ax(t) + Bu(t) + E\omega(t) \tag{11}$$

subject to $Hx(t) \leq K$, where $x = [v_y, \ \dot{\psi}, e_\psi, e_y]$, $u = \delta$ and $\omega = \dot{\psi}_d$ are the state, the input and the disturbance vectors respectively.

The vehicle model equation (11) is used together with a driver model that models a driver's steering behavior as a basis for a threat assessment algorithm.

According to a further embodiment of the invention for the driver modelling the orientation error $e_\psi^{lp}$ with respect to a look-ahead point, P in figure 1a), is defined as:

$$e_\psi^{lp} = \psi - \psi_d^{lp}$$

$$= e_\psi + \Delta\psi_d ,$$

where $\psi_d^{lp}$ is the desired orientation at time $t + t_{lp}$, where $t$ is the current time, $t_{lp}$ is the preview time and

$$\Delta\psi_d = \psi_d - \psi_d^{lp} .$$

The preview signal $\psi_d^{lp}$ is defined with respect to the preview time $t_{lp}$ This can be mapped into the preview distance $d_{lp}$ traveled by the vehicle along the curve Γd from the point O, at constant speed $v_x$.

According to an embodiment of the steering angle $\delta$ which is output of the driver modelling can be computed from:

$$\delta = -K_y e_y - K_\psi e_\psi^{lp} ,$$

$$= -K_y e_y - K_\psi e_\psi - K_\psi \Delta\psi_d , \qquad (13)$$

where the gains $K_y, K_\psi$ are constant and estimated using a least squares method and experimental data. Alternatively the gains $K_y, K_\psi$ are time varying and arranged to be updated online.

The driver's steering command computed in equation (13) consists of a linear state feedback term and a feedforward term depending on the desired orientation at the look-ahead point, P, i.e., the preview information. $\Delta\psi_d$ in equation (12) depends on the preview time $t_{lp}$ that, in the method according to the present invention, is considered as a parameter of the driver's model. Hence $K_y$ and $K_\psi$, $t_{lp}$ can be identified from experimental data.

The constrained autonomous system, obtained by combining the vehicle model equation (5) and the constraints of equations (8) and (10) with the driver model equation (13), can be compactly written:

$$x_{cl}(t+1) = A_{cl}^d x_{cl}(t) + E_{cl}^d \omega_{cl}(t) \qquad (15a)$$

subject to $H_{cl} x_{cl}(t) \leq K_{cl}$ (15b)

where $x_{cl} = [v_y, \dot{\psi}, e_\psi, e_y]$ and $\omega_{cl} = [\dot{\psi}_d, \Delta\psi_d]$ are the state and disturbance vectors respectively and matrices $A_{cl}$, $E_{cl}$, $H_{cl}$ and $K_{cl}$ have been omitted due to lack of space. It should be noted that both $\psi^d$ and $\omega^{cl}$ describe the road geometry.

The model equation (14) is discretized with a sampling time $T_s$, to obtain the discrete time constrained autonomous system with disturbances

$$x_{cl}(t+1) = A_{cl}^d x_{cl}(t) + E_{cl}^d \omega_{cl}(t) \qquad (15a)$$

subject to

$$H_{cl} x_{cl}(t) \leq K_{cl} \qquad (15b),$$

where, for the sake of simplicity, the state, the disturbance and the time index have been denoted using the same symbols as in equation (14).

The following assumptions on the disturbance signal $\omega^{cl}$ have been made.

Assumption 1: $\omega_{cl}(t) \in W$, $\forall t \geq 0$, where $W \subseteq R^2$ is a polyhedron that contains the origin in its interior.

Assumption 2. At every time instant $t$, the disturbance $\omega_{cl}(t)$ is known over a finite time horizon of N steps.

At every time instant t, the second component of the disturbance vector, i.e. $\Delta\psi_d$, is based on the desired orientation $\psi_d^{lp}$ at time $t + N_{tp}$ with $N_{tp} = t_{lp}/T_8$ (see equation (12)). This is the desired vehicle orientation at the look-ahead point, P. Hence, assumption 2 on the disturbance $\omega_{cl}$ requires knowledge of the road geometry over a future time horizon of $N_{lp}$ steps.

$X_{feas}$ denotes the set of admissible states and is given by

$$X_{feas} = \{ x \in \mathbb{R}^4 : H_{cl} x \leq K_{cl} \}. \qquad (16)$$

At every time instant, a terminal target set $T \subseteq X_{feas}$ is considered.

$W_t = [\omega_t, \omega_{t+1}, \dots \omega_{t+N-1}]$ denotes the sequence of disturbance samples over the time horizon $[t, t+N-1]$ and $W_{t,i} = [\omega_{t+i}, \dots, \omega_{t+N-1}]$ denotes any sequence extracted from $W_t$. The sequence of states sets $X_y(W_t) = [X_t, X_{t+1}, \dots X_{t+N-1}]$ is computed from:

$$\mathcal{X}_{t+1}\,(\mathcal{W}_{t,i)=}\ \ \mathcal{X}_{feas}\ \cap Pre_{f_a}\,(\mathcal{X}_{t+i+1}, \omega_{t+i}),\qquad\qquad(17a)$$

$$i = N - 1, ..., 0,$$

$$\mathcal{X}_{t+N}\,=\,\mathcal{T},\qquad\qquad(17b)$$

where, $f_a$ denotes the right hand side of equation (15a). The set $X_t$ is called the safe set at time t.

The calculation of the sequence $X_t\,(W_t)$ is performed at every time step, based on the updated disturbance sequence $W_t$. Moreover, if at the current time t the state of the system equation (15) belongs to the safe set $X_t$, the autonomous system equation (15), i.e., the vehicle in closed loop with the driver, is guaranteed to evolve to the set $T$ in N steps, while satisfying the constraints of equation (15b).

In summary, the proposed threat assessment algorithm comprises three main steps to be performed at every time step:

1. select a terminal target set, $T$,
2. perform the backward calculation of a sequence of safe sets $X_{t+i}$ according to equation (17) based on the future disturbance sequence $W_t$, and set $T$, and
3. check whether a current state $x_{cl}(t)$ belongs to said calculated sequence of safe vehicle states, $X_{tx}$, in order to assess the driver's ability in safely driving the vehicle from a current vehicle state to a target set $T$ over the future horizon of $N_{steps}$.

If the state does not belong to the safe set $X_t$, an action is required in order to "enlarge" the safe set to enclose the current state. Such an action might be the activation of a driver assistance system.

It should be noted that the proposed algorithm guarantees a "safe" (i.e., with guarantee of constraints satisfaction) reaching of the target set $T$. In general, the driver is not guaranteed to keep the vehicle within $T$ after the time $t + N$.

The choice of the terminal set $T$ in the threat assessment algorithm affects the effectiveness and the conservativeness of the algorithm. Indeed, the simplest choice is setting $T=X_{feas}$. In this case, the algorithm guarantees safe driving only over the future N steps.

As an alternative, the set $T$ may be chosen as $T = O_\infty$, where $O_\infty \subseteq X_{feas}$ is the maximal robust positive invariant set for the autonomous system equation (15a) subject to the constraints of equation (15b). In this case,

$$x(t + N) \in \mathcal{O}_\infty \implies x(t + N + k) \in \mathcal{O}_\infty, \quad \forall \omega(t) \in \mathcal{W}, \ k \in \mathbb{N}^+,$$

i.e. the vehicle will be kept within the lane, despite all admissible lane curvature beyond the look-ahead point. Setting the final set equal to the maximal robust positive invariant set might lead to high conservativeness of the threat assessment algorithm.

It should be noted that further, or fewer parameters may be considered in the vehicle and driver modelling than the examples given in this document.

The present inventions also concerns a computer program product that comprises a computer program containing computer program code means arranged to cause a computer or a processor to execute the steps of a method according to any of the embodiments of the invention, stored on a computer-readable medium or a carrier wave.

The present invention further concerns an electronic control unit (ECU) that comprises such a computer program product and a vehicle that comprises such a computer program product or such an electronic control unit.

The present invention also concerns the use of set invariance theory for threat assessment in a vehicle.

BRIEF DESCRIPTION OF THE DRAWINGS

The present invention will hereinafter be further explained by means of non-limiting examples with reference to the appended figures where;

Figure 1a      provides a definition of control errors in equation (13),

Figure 1b      provides notation for a single track model,

Figure 2        shows validation of the driver model according to an embodiment of the invention, whereby estimated steering angle data is shown on the uppermost graph and validation data is shown on the lowermost graph,

Figure 3a       shows a vehicle while negotiating a curve,

Figure 3b       shows the safe set at point 1 in figure 3a,

Figure 3c       shows the safe set at point 2 in figure 3a, and

Figure 4        shows a vehicle according to an embodiment of the present invention.

It should be noted that the drawings have not been drawn to scale and that the dimensions of certain features have been exaggerated for the sake of clarity.

DETAILED DESCRIPTION OF EMBODIMENTS

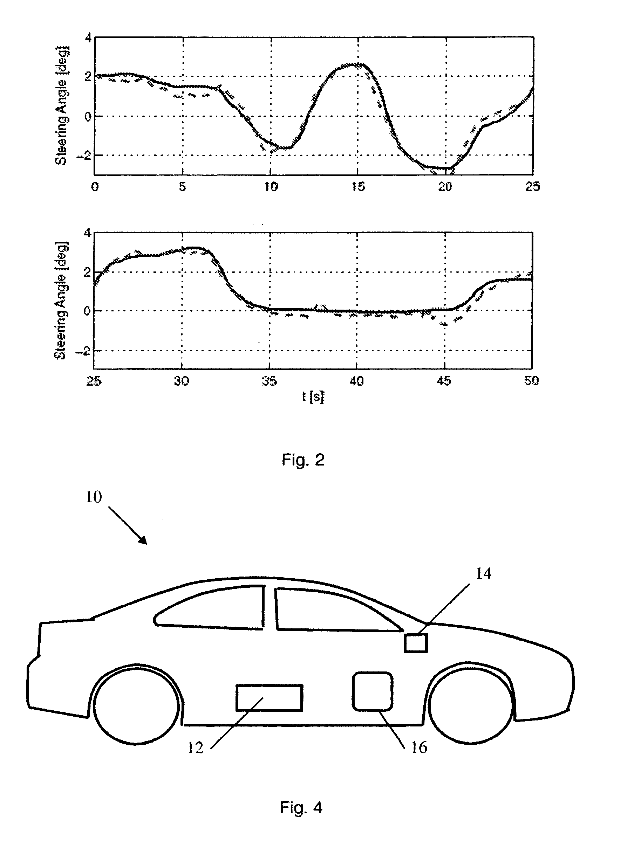

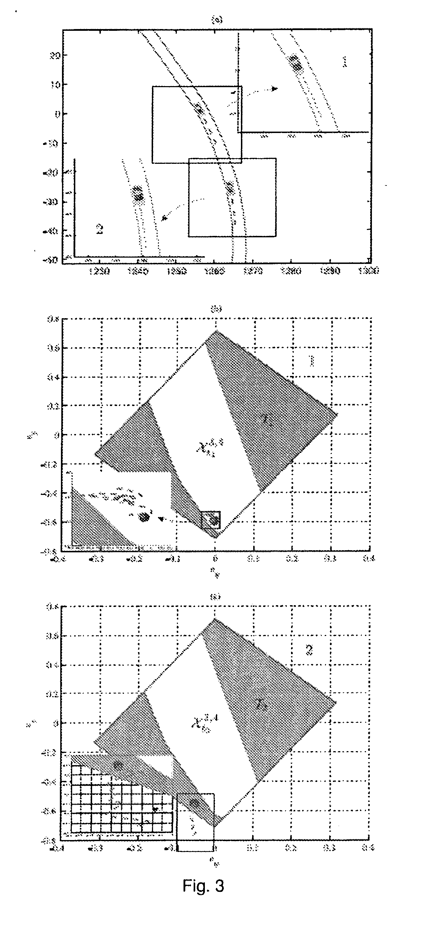

The threat assessment algorithm according to the present invention for indicating vehicle instability and/or lane crossing has been experimentally validated on a test track. Full state measurements have been obtained through a differential GPS, a built-in high precision gyro and a digital map. The test track resembled a country road with several sharp curves. In order to assess the algorithm performance in a wide range of operating conditions, the vehicle was driven several laps using both a normal and a slightly rougher driving style, yet without activating any stability system.
The data used for parameters estimation were collected in normal driving. The problem of estimating the parameters $K_y$, $K_\psi$ and $t_{lp}$ in equation (13) has been formulated as a nonlinear least squares problem since the driver model is linear only in the parameters $K_y$, $K_\psi$. The data set used for parameters identification is shown in Figure 2(a), while the validation data set is displayed in Figure 2(b). The results in Figure 2(b) show good matching between the driver's steering, predicted by the model equation (13) and measurements.
The driver model equation (13) has been used to validate, through experimental data, the threat assessment algorithm according to the present invention. A scenario in which the driver is negotiating the curve shown in Figure 3(a) at a constant speed of 90 km/h has been considered. The vehicle positions 1 and 2 on the track, shown in figure 3(a) have been considered. The time instants when the vehicle is in positions 1 and 2, respectively are denoted by $t_1$ and $t_2$, The dashed lines in figures 2a and 2b starting from the vehicle denote the horizon of N steps, over which the disturbance is assumed to be known. The solid lines is the driver's measured steering angle and the dashed lines are the steering angles predicted using model equation (13). In the two vehicle positions safe sets $X_{t1}$ and $X_{t2}$ have been computed, according to the threat assessment algorithm according to the present invention, where set $T = X_{feas}$ is the terminal set and using the following parameters

$$\beta_{max} = -\beta_{min} = 7.1°, \qquad v_x = \frac{90km}{h}, \qquad t_{l_p} = 0.8s,$$

$$N = 50, \quad T_s = 0.01s, \quad e_{y_{max}} = -e_{y_{min}} = 1.56m.$$

In figures 3b and 3c the polyhedral $\mathcal{X}_{t_1}^{3,4}$ and $\mathcal{X}_{t_2}^{3,4}$, where

$$\mathcal{X}_t^{3,4} = \mathcal{X}_t \cap \left\{ x \in \mathbb{R}^4 : \begin{bmatrix} 1 & 0 & 0 & 0 \\ 0 & 1 & 0 & 0 \end{bmatrix} x = \begin{bmatrix} x_{cl}^1(t) \\ x_{cl}^2(t) \end{bmatrix} \right\} \qquad (18)$$

and the superscript $i$ in $x_{cl}^i(t)$ denoting the i-th component of the vector $x_{cl}(t)$, are shown. The states $x_{cl}(t_1)$ and $x_{cl}(t_2)$ are marked with a circle in Figures 3(b) and 3(c), respectively. It should be noted $x_{cl}(t_1) \; \mathcal{X}_t^{3,4}$ and $x_{cl}(t_2) \; \notin \; \mathcal{X}_{t_2}^{3,4}$. Hence, from the initial state $x_{cl}(t_1)$ the vehicle will safely travel over a horizon of N steps while, from the initial state $x_{cl}$

($t_2$) the vehicle state trajectory will violate the constraints of equation (16). This is confirmed by the measured state trajectories, shown in Figures 3(b) and 3(c) with dashed lines. In particular, in Figure 3(b), starting from the initial state $x_{cl}(t_1)$ the state trajectory entirely evolves within the set $\mathcal{T}_1 = \bigcup\limits_{t=t_1}^{t_{1+N-1}} \mathcal{T}^{3,4}$ where the sets $T^{3,4}$ are obtained by replacing $X_t$ with $T$ in equation (18). In Figure 3(c), instead, the state trajectory leaves the $\mathcal{T}_2 = \bigcup\limits_{t=t_2}^{t_{2+N-1}} \mathcal{T}^{3,4}$ set, the vehicle violates the bounds on the lateral deviation from the lane centerline.

The present invention therefore concerns a model based threat assessment method for semi-autonomous driving. First a set of constraints is introduced describing "safe" driving. Then, based on the knowledge of the road geometry over a future finite time horizon, the vehicle and driver modeling, set invariance theory is used to calculate a sequence of safe states sets. The validation of the method according to the present invention with experimental results demonstrates that the method effectively predicts a constraints violation, possibly indicating the possibility of an accident or loss of vehicle control.

Figure 4 shows a vehicle 10 according to an embodiment of the invention. The vehicle comprises an ECU 12 comprising a computer program product containing computer program code means arranged to cause a computer or a processor to execute the steps of a method according to any of the embodiments of the invention stored on a computer-readable medium. The vehicle comprises at least one sensor 14 for obtaining information about the surrounding environment, such as a GPS system and/or a camera. The vehicle 10 also comprises an advanced driver assistance system 16 which is activated depending on the results of the threat assessment carried out by the ECU 12.

Further modifications of the invention within the scope of the claims would be apparent to a skilled person. For example, the method for threat assessment according to the present invention need not necessarily be carried out on board the vehicle but may be carried out at an external location whereby control signals may then be sent to the vehicle to activate a driver assistance system.

**Claims**

1. Method for threat assessment in a vehicle (10) comprising the steps of

   • introducing a set of constraints on vehicle states which are satisfied under safe driving conditions,
   • obtaining information about the surrounding environment over a future finite time horizon, and ), **characterized in that** it comprises the steps of
   • calculating a sequence of safe vehicle state sets based on vehicle and driver mathematical models using set invariance theory and reachability analysis, and
   • activating an autonomous intervention if a current vehicle state does not belong to said calculated sequence of safe vehicle state sets.

2. Method according to claim 1, **characterized in that** in said vehicle modelling the vehicle motion within a lane, subject to lateral and yaw dynamics, is described by the following set of differential equations;

$$m\dot{v_y} = -mv_x\,\dot{\psi} + 2\left[F_{y_f} + F_{y_r}\right], \qquad (5a)$$

$$J_z\ddot{\psi} = 2\left[l_f\,F_{y_f} - l_r\,F_{y_r}\right], \qquad (5b)$$

$$\dot{e_\psi} = \dot{\psi} - \dot{\psi_d}\,, \qquad (5c)$$

$$\dot{e_y} = v_y + v_x e_\psi \, , \qquad\qquad (5d)$$

where $m$ and $J_z$ denote the vehicle mass and yaw inertia, respectively, $l_f$ and $l_r$ are the distances of the vehicle center of gravity from the front and rear axles, respectively, $v_x$ and $v_y$ are the longitudinal and lateral velocities, respectively, $\psi$ is the turning rate in the vehicle body frame, where $\psi$ denotes the vehicle orientation with respect to the fixed global frame (X, Y), $F_{yf}$, $F_{yr}$ are the lateral tyre forces at the front and rear axles, respectively and where, in (5c) and (5d), $e_\psi$ and $e_y$ denote the vehicle orientation and position errors, respectively, with respect to the road centerline and $\psi_d$ is the desired vehicle orientation.

3. Method according to claim 2, **characterized in that** lateral tyre forces in equations (5a) and (5b) are computed as;

$$F_{y,i} = -C_i \alpha_i \, , \quad i \in \{f, r\}, \qquad (6)$$

where $C_i$ are the tyre cornering stiffness coefficients at the two axles and $\alpha_i$ are the tyre slip angles which, for small values, can be approximated as;

$$\alpha_f = \frac{v_y + l_f \, \dot{\psi}}{v_x} - \delta \, , \qquad\qquad (7a)$$

$$\alpha_r = \frac{v_y - l_r \, \dot{\psi}}{v_x} \, , \qquad\qquad (7b)$$

with $\delta$ denoting the front steering angle.

4. Method according to any of the preceding claims, **characterized in that** said set of constraints on vehicle states which are satisfied under safe driving conditions includes constraints on the vehicle body side slip angle $\beta$, where $\beta$ is approximated as $\beta = \frac{v_y}{v_x}$, where $v_x$ and $v_y$ are the longitudinal and lateral velocities of the vehicle.

5. Method according to any of the preceding claims, **characterized in that** said set of constraints on vehicle states which are satisfied under safe driving conditions includes constraints on the vehicle position within a lane, whereby the distances of the four vehicle corners from the lane centreline are denoted by:

$$e_{y_{fl}} = e_y + \frac{c}{2} + ae_\psi \, , \quad e_{y_{fr}} = e_y - \frac{c}{2} + ae_\psi \, ,$$

$$e_{y_{rl}} = e_y + \frac{c}{2} - be_\psi \, , \quad e_{y_{rr}} = e_y - \frac{c}{2} - be_\psi \, ,$$

where $c$ is the vehicle width and a and b are the distances of the center of gravity from the front and rear vehicle bumpers, respectively and where the constraints on the vehicle position are given by:

$$e_{y_{min}} \le e_{y_{ij}} \le e_{y_{max}} \, , \quad i \in \{f, r\}, \; j \in \{l, r\}, \qquad (10)$$

where $e_{y_{min}}$ and $e_{y_{max}}$ set the maximum allowed deviation from the lane centreline.

6. Method according to any of the preceding claims, **characterized in that** in said driver modelling the orientation error $e_\psi^{lp}$ with respect to a look-ahead point, P, is defined as:

$$e_\psi^{lp} = \psi - \psi_d^{lp}$$
$$= e_\psi + \Delta\psi_d \ ,$$

where $\psi_d^{lp}$ is the desired orientation at time t + $t_{lp}$, where $t$ is the current time, $t_{lp}$ is the preview time and $\Delta\psi_d = \psi_d - \psi_d^{lp}$, and where the preview signal $\psi_d^{lp}$ is defined with respect to the preview time $t_{lp}$.

7. Method according to any of the preceding claims, **characterized in that** in said driver modelling the steering angle δ is computed from:

$$\delta = -K_y e_y - K_\psi e_\psi^{lp} \ ,$$
$$= -K_y e_y - K_\psi e_\psi - K_\psi \Delta\psi_d \ , \qquad (13)$$

where the gains $K_y, K_\psi$ are constant and estimated using a least squares method and experimental data.

8. Method according to any of claims 1-6, **characterized in that** in said driver modelling the steering angle δ is computed from:

$$\delta = -K_y e_y - K_\psi e_\psi^{lp} \ ,$$
$$= -K_y e_y - K_\psi e_\psi - K_\psi \Delta\psi_d \ , \qquad (13)$$

where the gains $K_y, K_\psi$ are time varying and arranged to be updated online.

9. Method according to claim 8, **characterized in that** it comprises the following steps:

   • selecting a terminal target set, $T$,
   • performing the backward calculation of a sequence of safe sets $X_{t+i}$ based on the future disturbance sequence $W_t$ and set $T$, and
   • checking whether a current state $x_{cl}(t)$ belongs to said calculated sequence of safe vehicle states, $X_{tx}$ in order to assess the driver's ability in safely driving the vehicle from a current vehicle state to a target set $T$ over the future horizon of $N$ steps.

10. Computer program product, **characterized in that** it comprises a computer program containing computer program code means arranged to cause a computer or a processor to execute the steps of a method according to any of claims 1-9, stored on a computer-readable medium or a carrier wave.

11. Electronic control unit (ECU) (12), **characterized in that** it comprises a computer program product according to claim 10.

12. Vehicle (10), **characterized in that** it comprises a computer program product according to claim 10 or an electronic control unit (ECU) (12) according to claim 11.

**Patentansprüche**

1. Verfahren zur Gefahreneinschätzung in einem Fahrzeug (10), mit den folgenden Schritten:

   • Einführen einer Menge von Nebenbedingungen für Fahrzeugzustände, die unter Bedingungen sicheren Fahrens erfüllt sind,
   • Erhalten von Informationen über das umgebende Umfeld über einen zukünftigen endlichen Zeithorizont hinweg und **dadurch gekennzeichnet, dass** es die folgenden Schritte umfasst:
   • Berechnen einer Sequenz von sicheren Fahrzeugzustandsmengen auf der Basis von mathematischen Fahrzeug- und Fahrermodellen unter Verwendung von Mengeninvarianztheorie und Erreichbarkeitsanalyse und
   • Aktivieren eines autonomen Eingriffs, wenn ein aktueller Fahrzeugzustand nicht zu der berechneten Sequenz von sicheren Fahrzeugzustandsmengen gehört.

2. Verfahren nach Anspruch 1, **dadurch gekennzeichnet, dass** beim Fahrzeugmodellieren die Fahrzeugbewegung in einer Spur, die laterale und Gierdynamik erfordert, durch die folgende Menge von Differenzialgleichungen beschrieben wird:

$$m\dot{v}_y = -mv_x\dot{\psi} + 2\left[F_{y_f} + F_{y_r}\right],\qquad(5a)$$

$$J_z\ddot{\psi} = 2[l_f F_{y_f} - l_r F_{y_r}],\qquad(5b)$$

$$\dot{e}_\psi = \dot{\psi} - \dot{\psi}_d,\qquad(5c)$$

$$\dot{e}_y = v_y + v_x e_\psi,\qquad(5d)$$

wobei $m$ und $Jz$ die Fahrzeugmasse bzw. Gierträgheit bedeuten, $l_l$ und $l_r$ die Distanzen des Fahrzeugschwerpunkts von der Vorder- bzw. Hinterachse sind, $v_x$ und $v_y$ die Longitudinal- bzw. Lateralgeschwindigkeit sind, $\psi$ die Drehgeschwindigkeit des Fahrzeugchassis ist, wobei $\psi$ die Fahrzeugorientierung mit Bezug auf ein festes globales Bezugssystem (X, Y) bedeutet, $F_{yl}$, $F_{yr}$ die lateralen Reifenkräfte an der Vorder- bzw. Hinterachse sind und wobei in (5c) und (5d) $e_\psi$ und $e_y$ die Fahrzeugorientierung bzw. Positionsfehler mit Bezug auf die Straßenmittellinie bedeuten und $\psi_d$ die gewünschte Fahrzeugorientierung ist.

3. Verfahren nach Anspruch 2, **dadurch gekennzeichnet, dass** laterale Reifenkräfte in Gleichung (5a) und (5b) folgendermaßen berechnet werden:

$$F_{y,i} = -C_i\alpha_i,\ \ i \in \{f,r\},\qquad(6)$$

wobei $C_i$ die Reifen-Kurvenfahrt-Steifigkeitskoeffizienten an den beiden Achsen sind und $\alpha_i$ die Reifenschlupfwinkel sind, die für kleine Werte folgendermaßen approximiert werden können:

$$\alpha_f = \frac{v_y + l_f\dot{\psi}}{v_x} - \delta,\qquad(7a)$$

$$\alpha_r = \frac{v_y - l_r \dot{\psi}}{v_x}, \qquad (7b)$$

wobei $\delta$ den Frontlenkwinkel bedeutet.

4. Verfahren nach einem der vorhergehenden Ansprüche, **dadurch gekennzeichnet, dass** die Menge von Nebenbedingungen für Fahrzeugzustände, die unter Bedingungen sicheren Fahrens erfüllt sind, Nebenbedingungen für den Fahrzeugchassis-Schlupfwinkel $\beta$ umfasst, wobei $\beta$ als $\beta = \dfrac{v_y}{v_x}$. approximiert wird, wobei $v_x$ und $v_y$ die Longitudinal- und Lateralgeschwindigkeit des Fahrzeugs sind.

5. Verfahren nach einem der vorhergehenden Ansprüche, **dadurch gekennzeichnet, dass** die Menge von Nebenbedingungen für Fahrzeugzustände, die unter Bedingungen sicheren Fahrens erfüllt sind, Nebenbedingungen für die Fahrzeugposition in einer Spur umfasst, wobei die Distanzen der vier Fahrzeugecken von der Spurmittellinie folgendermaßen bezeichnet werden:

$$e_{y_{fl}} = e_y + \frac{c}{2} + a e_\psi, \quad e_{y_{fr}} = e_y - \frac{c}{2} + a e_\psi,$$

$$e_{y_{rl}} = e_y + \frac{c}{2} - b e_\psi, \quad e_{y_{rr}} = e_y - \frac{c}{2} - b e_\psi,$$

wobei c die Fahrzeugbreite ist und a und b die Distanzen des Schwerpunkts von der vorderen bzw. hinteren Fahrzeugstoßstange sind und wobei die Nebenbedingungen für die Fahrzeugposition gegeben werden durch:

$$e_{y_{min}} \le e_{y_{ij}} \le e_{y_{max}}, \ i \in \{f, r\}, \ j \in \{l, r\}, \qquad (10)$$

wobei $e_{y_{min}}$ und $e_{y_{max}}$ die maximal zulässige Abweichung von der Spurmittellinie setzen.

6. Verfahren nach einem der vorhergehenden Ansprüche, **dadurch gekennzeichnet, dass** beim Fahrermodellieren der Orientierungsfehler $e_\psi^{lp}$ mit Bezug auf einen Vorausschaupunkt P definiert ist als

$$e_\psi^{lp} = \psi - \psi_d^{lp}$$
$$= e_\psi + \Delta\dot{\psi}_d,$$

wobei $\psi_d^{lp}$ die gewünschte Orientierung zum Zeitpunkt $t + t_{lp}$ ist, wobei $t$ die aktuelle Zeit, $t_{lp}$ die Vorschauzeit

und $\Delta \psi_d = \psi_d - \psi_d^{lp}$ ist und wobei das Vorschausignal $\psi_d^{lp}$ mit Bezug auf die Vorschauzeit $t_{lp}$ definiert ist.

**7.** Verfahren nach einem der vorhergehenden Ansprüche, **dadurch gekennzeichnet, dass** beim Fahrermodellieren der Lenkwinkel δ aus

$$\begin{aligned}\delta &= -K_y e_y - K_\psi e_\psi^{lp}, \\ &= -K_y e_y - K_\psi e_\psi - K_\psi \Delta \psi_d,\end{aligned} \qquad (13)$$

berechnet wird, wobei die Verstärkungsfaktoren $K_y$, $K_\psi$ konstant sind und unter Verwendung eines Least-Squares-Verfahrens und experimenteller Daten geschätzt werden.

**8.** Verfahren nach einem der Ansprüche 1-6, **dadurch gekennzeichnet, dass** beim Fahrermodellieren der Lenkwinkel δ aus

$$\begin{aligned}\delta &= -K_y e_y - K_\psi e_\psi^{lp}, \\ &= -K_y e_y - K_\psi e_\psi - K_\psi \Delta \psi_d,\end{aligned} \qquad (13)$$

berechnet wird, wobei die Verstärkungsfaktoren $K_y$, $K_\psi$ zeitlich variieren und dafür ausgelegt sind, online aktualisiert zu werden.

**9.** Verfahren nach Anspruch 8, **dadurch gekennzeichnet, dass** es die folgenden Schritte umfasst:

• Auswählen einer End-Zielmenge $T$,
• Durchführen der Rückwärtsberechnung einer Sequenz von sicheren Mengen $X_{t+i}$ auf der Basis der zukünftigen Störungssequenz $W_1$ und der Menge $T$ und

• Prüfen, ob ein aktueller Zustand $\tilde{x}_{cl}(t)$ zu der berechneten Sequenz von sicheren Fahrzeugzuständen

$X_t$ gehört, um das Vermögen des Fahrers, das Fahrzeug über den zukünftigen Horizont von $N$ Schritten sicher von einem aktuellen Fahrzeugzustand zu einer Zielmenge $T$ zu fahren, einzuschätzen.

**10.** Computerprogrammprodukt, **dadurch gekennzeichnet, dass** es ein Computerprogramm umfasst, das Computerprogrammcodemittel enthält, die dafür ausgelegt sind, zu bewirken, dass ein Computer oder Prozessor die Schritte eines Verfahrens nach einem der Ansprüche 1-9 ausführt, das auf einem computerlesbaren Medium oder einer Trägerwelle gespeichert ist.

**11.** Elektronische Steuereinheit bzw. ECU (12), **dadurch gekennzeichnet, dass** sie ein Computerprogrammprodukt nach Anspruch 10 umfasst.

**12.** Fahrzeug (10), **dadurch gekennzeichnet, dass** es ein Computerprogrammprodukt nach Anspruch 10 oder eine elektronische Steuereinheit bzw. ECU (12) nach Anspruch 11 umfasst.

**Revendications**

**1.** Méthode pour l'évaluation des menaces dans un véhicule (10) comprenant les étapes suivantes :

introduire un ensemble de contraintes sur les états du véhicule qui sont satisfaites dans des conditions de conduite sécuritaires,
obtenir des informations sur le milieu environnant dans un horizon de temps réduit dans le futur, et
**caractérisée en ce qu'**elle comprend les étapes suivantes :

calculer une séquence d'ensembles d'états sûrs de véhicule sur la base de modèles mathématiques relatifs au véhicule et au conducteur en utilisant une théorie d'invariance et une analyse d'atteinte d'objectif, et activer une intervention autonome si un état en cours du véhicule n'appartient pas à ladite séquence calculée d'ensembles d'états sûrs du véhicule.

2. Procédé selon la revendication 1, **caractérisé en ce que**, dans ladite modélisation du véhicule, le mouvement du véhicule dans une voie, sujet à des mouvements latéraux et de lacet, est décrit par l'ensemble suivant d'équations différentielles :

$$m\dot{v}_y = -mv_x\dot{\psi} + 2\left[F_{yf} + F_{yr}\right] \qquad (5\mathrm{a})$$

$$J_z\ddot{\psi} = 2\left[l_f F_{yf} - l_r F_{yr}\right] \qquad (5\mathrm{b})$$

$$\dot{e}_\psi = \dot{\psi} - \dot{\psi}_d \qquad (5\mathrm{c})$$

$$\dot{e}_y = v_y + v_x e_\psi \qquad (5\mathrm{d})$$

où m et Jz désignent la masse du véhicule et son inertie de lacet, respectivement, $l_f$ et $l_r$ sont les distances du centre de gravité du véhicule à l'essieu avant et à l'essieu arrière, respectivement, $V_x$ et $V_y$ sont les vitesses longitudinale et latérale, respectivement, $\Psi$ est le taux de rotation dans le repère de la carrosserie du véhicule, où $\Psi$ désigne l'orientation du véhicule par rapport au repère d'ensemble fixe (X, Y), $F_{yf}$, $F_{yr}$ sont les forces latérales des pneumatiques au niveau des essieux avant et arrière, respectivement, et où, dans les équations (5c) et (5d), $e_\Psi$ et $e_y$ désignent l'orientation du véhicule et les erreurs de position, respectivement, par rapport à la ligne centrale de la route et $\Psi_d$ est l'orientation souhaitée du véhicule.

3. Procédé selon la revendication 2, **caractérisé en ce que** les forces latérales des pneumatiques dans les équations (5a) et (5b) sont calculées comme suit :

$$F_{y,i} = -C_i\alpha_i, i \in \{f, r\} \qquad (6)$$

où les Ci sont les coefficients de rigidité en virage des pneumatiques au niveau des deux essieux, et les $\alpha_i$ sont les angles de patinage des pneumatiques qui, pour de petites valeurs, peuvent être approximés par :

$$\alpha_f = \frac{v_y + l_f\dot{\psi}}{v_x} - \delta \qquad (7\mathrm{a})$$

$$\alpha_r = \frac{v_y - l_r\dot{\psi}}{v_x} \qquad (7\mathrm{b})$$

avec $\delta$ désignant l'angle de braquage avant.

4. Procédé selon l'une quelconque des revendications précédentes, **caractérisé en ce que** ledit ensemble de contraintes sur les états du véhicule qui sont satisfaites dans des conditions de conduite sécuritaires comprend des contraintes sur l'angle de patinage $\beta$, ou $\beta$ est approximé par $= V_y/V_x$, où $V_x$ et $V_y$ sont les vitesses longitudinale et latérale du véhicule.

5. Procédé selon l'une quelconque des revendications précédentes, **caractérisé en ce que** ledit ensemble de contraintes sur les états du véhicule qui sont satisfaites dans des conditions de conduite sécuritaires comprend des contraintes sur la position du véhicule dans une voie, où les distances des quatre coins du véhicule par rapport à la ligne centrale de la voie sont désignés par :

$$e_{yfl} = e_y + c/2 + ae_\psi, \quad e_{yfr} = e_y - c/2 + ae_\psi,$$

$$e_{yrl} = e_y + c/2 - be_\psi, \quad e_{yrr} = e_y - c/2 - be_\psi \ ;$$

où c est la largeur du véhicule, et a et b sont les distances du centre de gravité par rapport aux pare-chocs avant et arrière du véhicule, respectivement, et où les contraintes sur la position du véhicule sont données par :

$$e_{ymin} \leq e_{yij} \leq e_{ymax}, \ i \in \{f, \ r\}, \ j \in \{l, \ r\}, \quad (10)$$

où $e_{ymin}$ et $e_{ymax}$ définissent la déviation maximale autorisée par rapport à la ligne centrale de la voie.

6. Procédé selon l'une quelconque des revendications précédentes, **caractérisé en ce que**, dans ladite modélisation du conducteur, l'erreur d'orientation $e^{lp}\Psi$ par rapport à un point de visée vers l'avant, P, est définie par :

$$\begin{aligned} e^{lp}{}_\psi &= \psi - \psi^{lp}{}_d \\ &= e_\psi + \Delta_{\psi d}, \end{aligned}$$

où $\Psi^{lp}{}_d$ est l'orientation souhaitée au temps $t + t_{lp}$, où t est le temps actuel, $t_{lp}$ est le temps de prévisualisation et $\Delta_{\Psi d}$, $= \Psi_d - \Psi^{lp}{}_d$, et où le signal de prévisualisation $\Psi^{lp}{}_d$ est défini par rapport au temps de prévisualisation $t_{lp}$.

7. Procédé selon l'une quelconque des revendications précédentes, **caractérisé en ce que**, dans ladite modélisation du conducteur, l'angle de braquage $\delta$ est calculé comme suit :

$$\begin{aligned} \delta &= -K_y e_y - K_\psi e^{lp}{}_\psi \\ &= - K_y e_y - K_\psi e_\psi - K_\psi \Delta \psi_d \quad (13) \end{aligned}$$

où les gains $K_y$, $K_\Psi$ sont constants et estimés à l'aide de la méthode des moindres carrés et de données expérimentales.

8. Procédé selon l'une quelconque des revendications 1 à 6, **caractérisé en ce que**, dans ladite modélisation du conducteur, l'angle de braquage $\delta$ est calculé comme suit :

$$\begin{aligned} \delta &= -K_y e_y - K_\psi e^{lp}{}_\psi \\ &= - K_y e_y - K_\psi e_\psi - K_\psi \Delta \psi_d \quad (13) \end{aligned}$$

où les gains $K_y$, $K_\Psi$ varient en fonction du temps et sont conçus pour être mis à jour en ligne.

9. Procédé selon la revendication 8, **caractérisé en ce qu'**il comprend les étapes suivantes :

   sélectionner un ensemble cible terminal, T,
   procéder au calcul inverse d'une séquence d'ensembles sûrs $X_{t+i}$ sur la base de la séquence de perturbation future $W_i$ et de l'ensemble $T_i$, et
   vérifier si un étant actuel $X_{cl}$ (t) appartient à ladite séquence calculée des états de véhicule sûrs, $X_t$, de manière à évaluer la capacité du conducteur à conduire en toute sécurité le véhicule d'un état de véhicule actuel à un ensemble cible T à l'horizon futur de N étapes.

10. Produit programme informatique, **caractérisé en ce qu'**il comprend un programme informatique contenant des moyens de code de programme informatique conçus pour entraîner qu'un ordinateur ou qu'un processeur exécute les étapes d'un procédé selon l'une quelconque des revendications 1 à 9, stockées sur un support lisible par un ordinateur ou une onde porteuse.

11. Unité de commande électronique (ECU) (12), **caractérisée en ce qu'**elle comprend un produit programme informatique selon la revendication 10.

12. Véhicule (10) **caractérisé en ce qu'**il comprend un produit programme informatique selon la revendication 10 ou une unité de commande électronique (ECU) (12) selon la revendication 11.

a)

b)

Fig. 1

Fig. 2

Fig. 4

Fig. 3

**EP 2 364 891 B1**

**REFERENCES CITED IN THE DESCRIPTION**

**Patent documents cited in the description**

- EP 2045161 A
- EP 2006181 A
- US 2009174536 A
- DE 102007019698
- EP 0483905 A
- US 2004186647 A